# FASCICULE DE BREVET EUROPEEN

(11) **EP 1 828 571 B1**
(45) Date de publication et mention de la délivrance du brevet: **20.04.2016**
(21) Numéro de dépôt: 05825939.1
(22) Date de dépôt: 12.12.2005
(51) Int. Cl.: F02C 7/042

(54) **AGENCEMENT D'ENTREE D'AIR DE VENTILATION**
LUFTEINLASSANORDNUNG EINER BELÜFTUNG
VENTILATING AIR INTAKE ARRANGEMENT

(30) Priorité: 20.12.2004 FR 0413554
(43) Date de publication de la demande: 05.09.2007
(73) Titulaire: AIRBUS OPERATIONS (SAS), 31060 Toulouse (FR)
(72) Inventeur: PORTE, Alain, F-31770 Colomiers (FR); PRAT, Damien, F-31770 Colomiers (FR)
(74) Mandataire: Gevers & Orès
(86) Numéro de dépôt international: PCT/FR2005/003101
(87) Numéro de publication internationale: WO 2006/067296

(56) Documents cités:
- BE-A- 464 754
- US-A- 2 396 598
- US-A- 3 611 724
- US-A- 3 915 413
- US-A- 5 226 455
- US-B1- 6 231 006

## Description

La présente invention concerne un agencement d'entrée d'air de ventilation comportant un canal de passage d'air avec un orifice de prise d'air, destiné à ventiler au moins une zone confinée dans un véhicule, par exemple, un aéronef.

On sait que de tels agencements d'entrée d'air de ventilation sont largement utilisés dans le domaine aéronautique à des fins de renouvellement de l'air dans une zone confinée contenant des matériels thermiquement sensibles et/ou des milieux ambiants dangereux, du type inflammable ou détonant, pour lesquels il est nécessaire d'assurer une ventilation continue de la zone afin d'éviter tout risque de dysfonctionnement des matériels ou d'incident environnant.

Tel est notamment le cas des nombreux dispositifs mécaniques et/ou électriques prévus dans l'espace ou zone confiné annulaire entre la nacelle et le carter externe de soufflante et des compresseurs d'un turboréacteur d'avion. Ces dispositifs, comme par exemple le fadec (full authority digital engine control), le boîtier relais d'accessoires (gearbox), le réservoir d'huile moteur, les composants fluidiques, etc ..., généralement fixés tout autour du carter externe et situés ainsi dans la zone confinée, sont ventilés par de l'air extérieur entrant dans l'agencement par l'orifice de prise d'air pour traverser le canal ménagé dans la nacelle et se diffuser, en sortie du canal, dans la zone confinée. Les dispositifs, de même que les vapeurs d'huile ou autres émanant de cet espace, sont ventilés par l'air frais extérieur diffusé par le canal d'air, ce qui contribue à assurer leur bon fonctionnement.

Pour répondre à la réglementation en vigueur, qui impose un taux de renouvellement d'air approprié par unité de temps de la zone confinée concernée, le canal de passage d'air de l'agencement a une section transversale prédéterminée permettant la circulation d'une quantité d'air suffisante dans le canal pour assurer, à sa sortie, le renouvellement d'air de la zone confinée contenant les dispositifs à ventiler.

Cependant, les dispositifs à refroidir et les vapeurs à chasser ne sont pas ventilés de façon optimale par les agencements d'entrée d'air connus.

En effet, dans ces agencements, si l'air extérieur entrant en amont par l'orifice de prise d'air dans le canal à section transversale prédéterminée de l'agencement et sortant en aval de celui-ci est suffisant pour ventiler correctement les dispositifs lorsque l'avion est en phase de roulage au sol, en phase de décollage ou en phase d'attente, donc à faible vitesse, en revanche, lorsque l'avion est en phase de vol de croisière à une vitesse et une altitude maximales, la quantité d'air ou le débit d'air sortant du canal de l'agencement en direction de la zone à ventiler est trop important. De la sorte, les dispositifs sont trop refroidis d'autant plus que la température de l'air extérieur est très basse à cette altitude de croisière, ce qui peut conduire à des dysfonctionnements. Des mesures ont par ailleurs permis de constater que, dans cette phase de vol, l'air circulant dans la zone confinée via le canal de l'agencement était renouvelé deux fois plus que nécessaire, si bien que le fadec, notamment, est trop refroidi, ce qui peut nuire à son bon fonctionnement.

La présente invention a pour but de remédier à ces inconvénients, et concerne un agencement d'entrée d'air dont la conception permet d'assurer une ventilation optimale d'une zone confinée telle que celle ci-dessus d'un turboréacteur -mais qui peut être également une zone feux ou une zone ventrale de l'avion (belly fairing) ou, d'une façon générale, toute zone plus ou moins close et thermiquement sensible d'un véhicule pour laquelle un renouvellement d'air est souhaité.

À cet effet, selon l'invention, l'agencement d'entrée d'air de ventilation comportant au moins un canal de passage d'air avec un orifice de prise d'air, destiné à ventiler au moins une zone confinée dans un aéronef par de l'air extérieur entrant en amont, à travers ledit orifice de prise d'air, dans ledit canal et sortant en aval de celui-ci en direction de ladite zone à ventiler, ledit agencement d'entrée d'air comportant des moyens d'obturation commandables permettant de faire varier la section transversale dudit canal et lesdits moyens d'obturation commandables comportant au moins une membrane, élastiquement déformable sous l'action d'une commande fluidique, de sorte que la section transversale dudit canal varie en fonction de la vitesse et de l'altitude dudit aéronef, est remarquable en ce que ladite commande fluidique comporte un tube de liaison, dont l'extrémité amont prélève la pression totale de l'air sur ledit aéronef et dont l'extrémité aval est en communication avec ladite membrane.

Ainsi, grâce à la présente invention, on obtient une commande directe, autonome, automatique et fiable du gonflage de la membrane, faisant varier la section transversale du canal de l'agencement d'entrée d'air et modifiant, selon les phases de vol de l'avion, le débit d'air entrant dans la zone confinée et, donc, ventilant au mieux les dispositifs concernés.

En vol de croisière de l'aéronef (vitesse et altitude maximales), la section transversale du canal de l'agencement est automatiquement réduite pour ventiler raisonnablement les dispositifs et éviter ainsi un refroidissement trop important de ces derniers. En revanche, lors du roulage au sol de l'aéronef ou en phase de décollage (faible vitesse), la section transversale du canal est automatiquement ouverte au maximum, pour faire circuler ainsi une quantité d'air maximale et ventiler convenablement les dispositifs situés dans la zone confinée.

Ainsi, grâce à l'invention, la quantité d'air prélevée par l'agencement d'entrée d'air de ventilation est automatiquement adaptée à chaque phase de vol, ce qui minimise la pénalité des performances de l'aéronef due à la ventilation.

L'extrémité amont dudit tube de liaison peut prélever ladite pression totale au niveau du bord d'entrée dudit orifice de prise d'air menant au canal, tandis que ladite extrémité aval dudit tube traverse, de façon étanche, un trou de communication ménagé dans ladite membrane.

De plus, on remarquera la simplicité de réalisation des moyens d'obturation qui, par une déformation volumique de la membrane dans le canal, permet de faire varier la section transversale de ce dernier.

Par exemple, ladite membrane est solidaire d'un support avec lequel elle définit un volume interne variable et qui est rapporté fixement sur une paroi latérale délimitant ledit canal.

De préférence, ledit canal présente une section transversale rectangulaire délimitée par des parois latérales deux à deux opposées, l'une des grandes parois latérales dudit canal comprenant lesdits moyens d'obturation déformables qui, quand ladite section transversale est maximale, sont effacés par rapport audit canal et, quand ladite section transversale est minimale, obturent partiellement ledit canal.

La déformation élastique de ladite membrane peut être guidée axialement, ledit tube de liaison faisant office de guidage pour ladite membrane et s'engageant perpendiculairement au centre de ladite membrane. Ainsi, la déformation de la membrane est symétrique et homogène.

De préférence, ladite membrane élastiquement déformable est circulaire ou quadrangulaire, par exemple rectangulaire.

Par ailleurs, l'agencement d'entrée d'air peut comprendre, de plus, un élément de protection situé au niveau de l'orifice de prise d'air et recouvrant au moins partiellement lesdits moyens d'obturation déformables.

Les figures du dessin annexé feront bien comprendre comment l'invention peut être réalisée. Sur ces figures, des références identiques désignent des éléments semblables.
La figure 1 représente schématiquement et partiellement en coupe, la nacelle d'un turboréacteur munie d'un agencement d'entrée d'air de ventilation symbolisé en A, conforme à l'invention.
La figure 2 est une vue de face, en coupe partielle selon la ligne II-II de la figure 1, de ladite nacelle du turboréacteur, montrant les différents dispositifs à ventiler.
La figure 3 est une coupe longitudinale agrandie de l'agencement de la figure 1, autorisant une entrée d'air de ventilation maximale.
Les figures 4 et 5 sont respectivement une coupe transversale selon la ligne IV-IV et une vue selon la flèche F de l'agencement de la figure 3.
La figure 6 est une coupe de l'agencement analogue à la figure 3 mais autorisant une entrée d'air de ventilation minimale.
La figure 7 est une coupe de l'agencement selon la ligne VII-VII de la figure 6.
La figure 8 représente une variante de réalisation dudit agencement en coupe longitudinale agrandie.
Les figures 9 et 10 sont respectivement une coupe transversale selon la ligne IX-IX et une vue selon la flèche G de l'agencement de la figure 8.
La figure 11 représente une autre variante de réalisation dudit agencement en coupe longitudinale agrandie.
La figure 12 est une coupe transversale de l'agencement selon la ligne XII-XII de la figure 11.
La figure 13 montre l'agencement représenté sur la figure 11, équipé d'un élément de protection.
La figure 14 représente encore une autre variante de réalisation dudit agencement en coupe longitudinale agrandie.
La figure 15 est une coupe transversale de l'agencement selon la ligne XV-XV de la figure 14. Les figures 3 à 10 ne constituent pas des exemples de réalisation de l'invention.

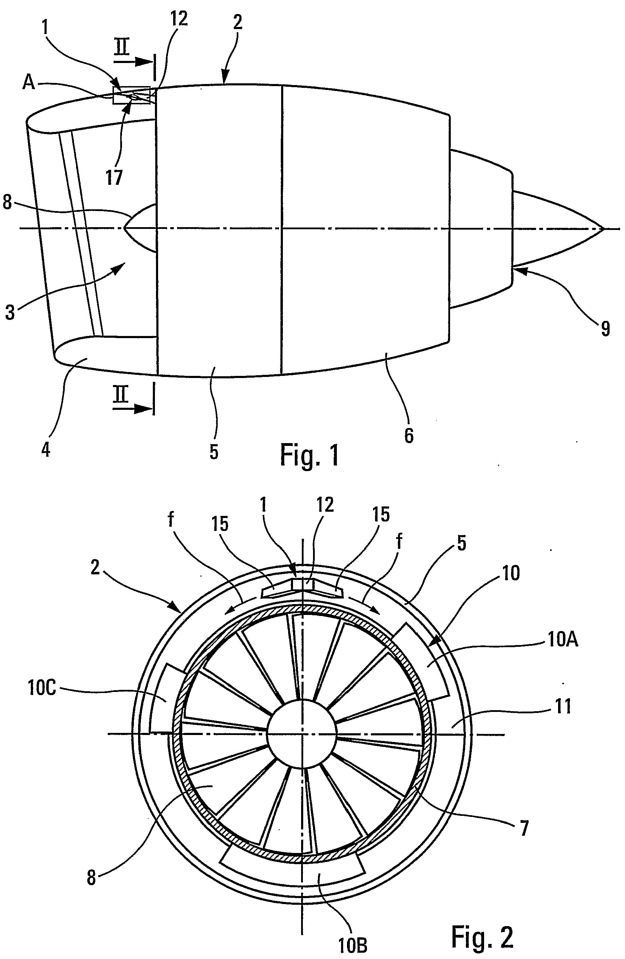

L'agencement d'entrée d'air de ventilation 1, conforme à l'invention et délimité par un rectangle A sur la figure 1, est prévu dans une nacelle 2 d'un moteur d'avion 3, tel qu'un turboréacteur. Comme le montre schématiquement la figure 1, la nacelle 2 comprend, de façon usuelle, une partie avant d'entrée d'air 4 pour l'alimentation en air du moteur, une partie centrale 5 entourant le carter externe 7 de soufflante 8 et les compresseurs du moteur, et une partie arrière 6 entourant la chambre de combustion et la turbine, d'où émerge le carter externe de la tuyère 9 et son cône.

Différents dispositifs ou équipements mécaniques et/ou électriques 10 sont rapportés sur le carter externe 7 de la soufflante et des compresseurs, c'est-à-dire dans l'espace ou zone annulaire 11 confiné entre la nacelle 2 et le carter externe 7 du moteur 3. On a représenté symboliquement sur la figure 2, certains des dispositifs 10 se trouvant dans cette zone 11, à savoir le fadec 10A, le boîtier relais d'accessoires 10B, et le réservoir d'huile moteur 10C.

Le renouvellement de l'air dans cette zone confinée 11 pour maintenir les dispositifs 10 dans une plage de température appropriée et permettre leur bon fonctionnement, est assuré par l'agencement d'entrée d'air de ventilation 1 qui est situé en haut de la partie avant 4 de la nacelle 2 et comporte, à cet effet, un canal 12 de passage d'air ménagé dans la paroi structurelle de la partie avant 4 et mettant en communication l'air extérieur avec la zone confinée 11. Pour cela, le canal 12 présente en amont un orifice 14 de prise d'air et, en aval, un diffuseur 15 en relation avec ledit espace, débouchant dans la partie centrale 5 de la nacelle.

Pour optimiser la ventilation, le canal 12 de passage d'air est légèrement incliné par rapport à la surface extérieure de la partie 4 de la nacelle et se dirige en aval vers l'axe longitudinal du moteur, pour prélever et amener au mieux l'air extérieur frais dans le canal et l'évacuer ensuite tangentiellement par un double diffuseur 15, comme le montrent les flèches f sur la figure 2, des deux côtés de l'espace confiné annulaire 11.

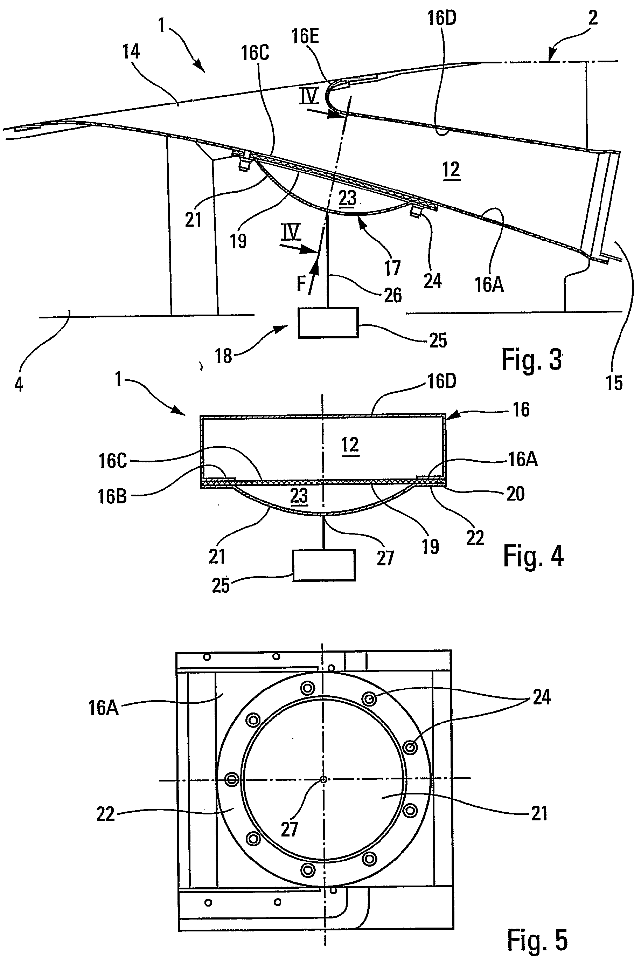

Le profil général du canal 12 de l'agencement 1 représenté sur la figure 3 est légèrement évolutif, c'est-à-dire qu'après avoir convergé suite à son orifice de prise d'air 14 tangentiel, il diverge quelque peu en direction du diffuseur 15 et sa section transversale, délimitée par les parois latérales 16, est, dans cet exemple, rectangulaire comme le montre notamment la figure 4.

Avantageusement, cette section transversale du canal 12 est rendue réglable et, à cet effet, l'agencement d'entrée d'air de ventilation 1 comporte des moyens d'obturation déformables 17 à commande fluidique 18. En variant cette section, on peut ainsi diminuer ou augmenter la quantité ou le débit d'air de ventilation en direction de la zone confinée 11, en fonction de la vitesse et de l'altitude de l'avion.

Dans l'exemple de réalisation montré sur les figures 3 à 5, les moyens d'obturation déformables 17 sont définis par une membrane 19 élastiquement déformable et circulaire, rapportée à sa périphérie 20 sur un bord circulaire plat 22 d'un support rigide 21 bombé en formant entre eux un volume interne 23. Le support bombé 21 et sa membrane 19 sont alors fixés, par des éléments de liaison 24 tels que des vis, contre le bord circulaire correspondant 16B d'une ouverture circulaire 16C ménagée à cet effet dans la paroi inférieure 16A du canal, sensiblement à l'aplomb du raccordement entre la paroi supérieure 16D du canal et le bord correspondant arrondi 16E de l'orifice de prise d'air 14. A cet endroit, la section transversale du canal 12 à profil évolutif est la plus faible.

La commande fluidique 18 de ces moyens d'obturation déformables 17 est, dans ce mode de réalisation, fournie par une source de fluide pressurisée commandable 25, symbolisée par un rectangle et reliée par un tuyau ou analogue 26 et de façon étanche, à un trou de communication 27 prévu au centre du support rigide bombé 21.

Sur les figures 3 à 5, la membrane 19 est dans une position inactive à plat, confondue avec la paroi inférieure 1 6A du canal, de sorte que la section transversale du canal 12 est maximale autorisant un débit d'air maximal en direction de la zone 11 à ventiler contenant les dispositifs 10. Une telle configuration de la membrane 19 est souhaitable notamment lorsque la vitesse de l'avion est faible, particulièrement en phase de roulage au sol ou de décollage. Le renouvellement d'air dans la zone confinée est ainsi assuré plusieurs fois par unité de temps.

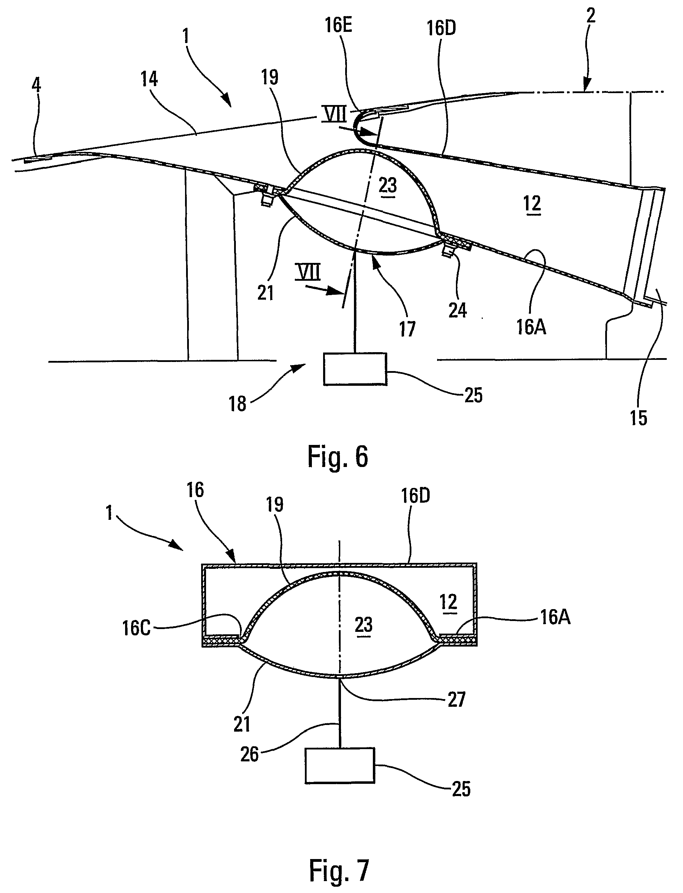

Sur les figures 6 et 7, sous l'action de la source pressurisée 25, le fluide tel qu'un gaz entre dans le volume interne 23 des moyens 17 via le tuyau 26 et gonfle la membrane élastiquement déformable 19. Celle-ci prend une forme sensiblement hémisphérique jusqu'à venir à fleur de la paroi supérieure 16D du canal par son sommet. On voit notamment sur la figure 7 que, dans cette position gonflée, la section transversale rectangulaire du canal 12, susceptible de laisser passer l'air extérieur entrant par l'orifice de prise d'air 14, est alors réduite et, dans ce cas, minimale puisqu'elle est diminuée de la section demi-circulaire de la membrane gonflée 19 comparativement à la figure 4. De la sorte, la quantité d'air traversant le canal 12 est limitée et minimale, ce qui permet de diffuser un moindre débit d'air de ventilation dans la zone confinée 11 et évite, de cette manière, par le gonflage de la membrane, de trop refroidir les équipements concernés 10 quand l'avion est en vol de croisière, c'est-à-dire à haute altitude et à une vitesse élevée.

Bien entendu, le débit d'air diffusé dans la zone 11 peut être modulé entre les deux valeurs maximale et minimale en agissant pour cela sur le gonflage de la membrane 19 des moyens d'obturation, ce qui a pour effet de modifier la section transversale dudit canal 12.

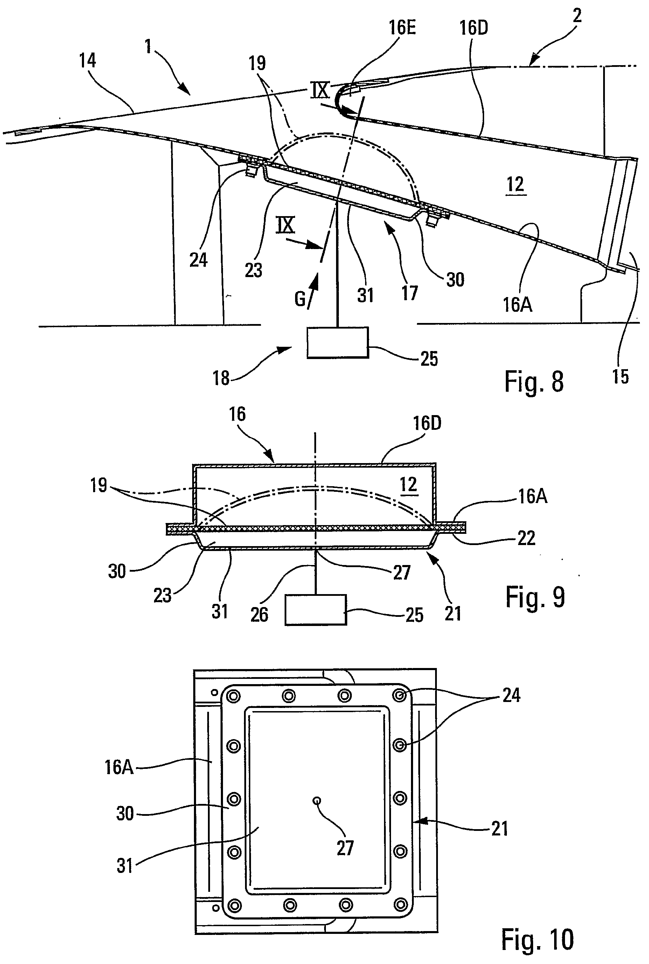

La variante de réalisation des moyens d'obturation 17 de l'agencement 1 illustrée sur les figures 8 à 10 diffère en ce que le support rigide 21 et la membrane élastiquement déformable 19 sont rectangulaires. Ainsi, le support 21 se présente sous la forme d'une cuvette rectangulaire 30 à fond plat 31, tandis que la membrane est rapportée sur le bord périphérique plat correspondant 22 du support en définissant avec ce dernier le volume interne variable 23. L'ensemble support 21 - membrane 19 est fixé par les vis 24 à la paroi inférieure 16A du canal dont la section transversale est toujours rectangulaire, et à un même emplacement que précédemment. Un trou de communication 27 ménagé dans le fond plat 31 du support 21 met en communication le volume interne 23 avec la source de fluide pressurisé 25 via le tuyau 26.

Le fonctionnement des moyens d'obturation déformables 17 à des fins de variation de la section de passage du canal 12 par la membrane rectangulaire 19 est bien entendu analogue à la réalisation précédente des figures 3 à 7. Une position en trait mixte de la membrane gonflée 19 est représentée sur les figures 8 et 9.

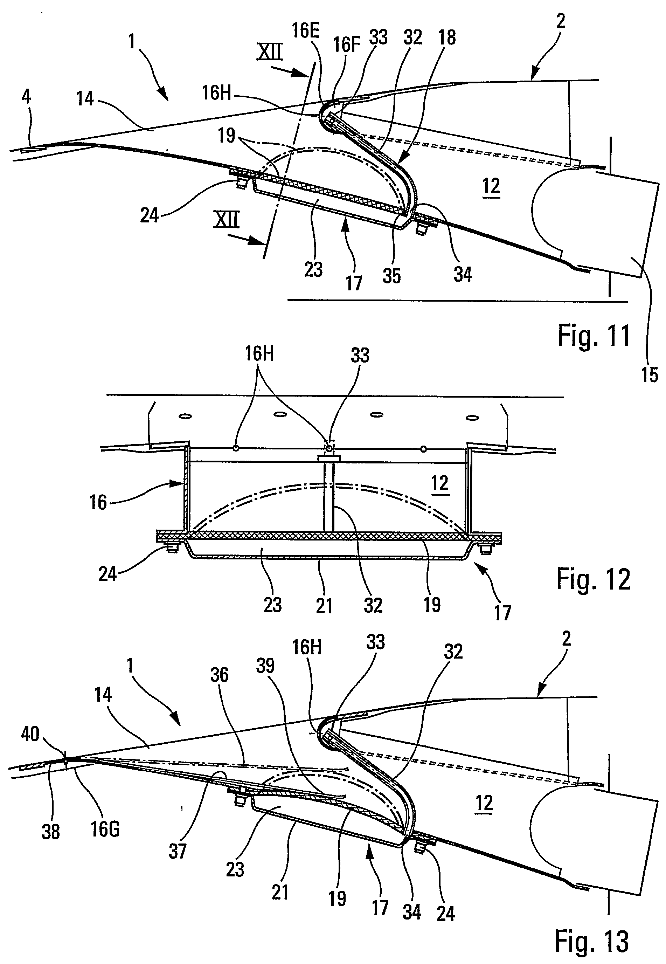

Dans la variante de réalisation préférée de l'agencement 1 montrée sur les figures 11 et 12, les moyens d'obturation 17 sont analogues à ceux précédemment décrits et comprennent un support rectangulaire 21 (ou cuvette 30) à fond plat 31 et une membrane élastiquement déformable 19, l'ensemble support 21 - membrane 19 étant disposé de la même façon dans le canal de section rectangulaire 12. En revanche, la commande fluidique 18 pour agir sur la membrane met en oeuvre la pression totale sur l'avion du fluide dans lequel il se déplace et comprend, à la place d'une source fluidique pressurisée 25, un tube de liaison 32, semblable à un tube de Pitot, dont une extrémité amont 33 est en prise directe avec l'air extérieur et dont l'extrémité aval 34 débouche dans le volume interne 23 de l'ensemble support-membrane.

Plus particulièrement, le tube 32 traverse le canal par les parois 16A et 16D et son extrémité amont 33 est située dans un espace creux 16F du bord supérieur arrondi 16E du canal délimitant en partie l'orifice 14 de prise d'air et constituant un bord frontal de l'agencement 1. Avantageusement, au moins un orifice 1 6H de prise de pression totale est ménagé dans la paroi du bord supérieur 16E pour mettre en communication l'extrémité amont 33 du tube avec le milieu extérieur (air), et l'extrémité aval 34 du tube traverse de façon étanche un trou 35 ménagé dans la membrane 19 et débouchant dans le volume interne 23.

Ainsi, on comprend que le gonflage de la membrane élastiquement déformable 19 est automatique et fonction de la pression totale aux orifices de prise de pression 16H, par l'intermédiaire du tube 32 et du volume interne 23 des moyens d'obturation 17. On obtient ainsi un réglage automatique et autonome de la section transversale du canal. Par exemple, quand l'avion a une vitesse minimale (décollage ou roulage au sol), la pression totale dans le tube 32 est faible de sorte que la membrane 19 est peu ou pas gonflée, et la section transversale de passage d'air dans le canal 12 de l'agencement 1 est alors maximale ou presque, permettant une ventilation appropriée des dispositifs 10 dans la zone confinée 11.

En revanche, quand l'avion est en vol de croisière proche de la vitesse maximale, la pression totale dans le tube 32 via les orifices 16H puis dans le volume interne 23 est élevée et engendre le gonflage de la membrane 19 dans le canal 12 et, simultanément, la diminution de la section transversale de passage de ce dernier. Ainsi, le débit d'air diffusé dans la zone confinée 11 est moindre, empêchant un refroidissement trop intense des dispositifs 10 tout en assurant une ventilation acceptable.

L'agencement d'entrée d'air de ventilation 1 représenté sur la figure 13 comporte un élément de protection 36 de la membrane élastiquement déformable 19 des moyens d'obturation 17. Cet élément 36 est défini simplement par une plaque mince souple 37 qui s'étend depuis le bord inférieur arrondi 16G de l'orifice d'entrée d'air 14 et sur la largeur du canal, jusqu'au milieu, au moins, de la membrane. L'extrémité amont 38 de la plaque souple est alors articulée sur le bord inférieur arrondi 1 6G par des vis 40, tandis que son extrémité aval 39 est libre et repose élastiquement sur la membrane. Ainsi, la plaque 37 protège la membrane 19 du milieu extérieur entrant dans le canal, optimise l'écoulement de l'air entrant dans le canal 12 et, sous son action élastique naturelle, ramène la membrane en position dégonflée lorsque la pression issue du tube cesse.

Sur les figures 11 à 13, on a représenté le tube 32 traversant le canal 12. Bien entendu, il est éventuellement possible de faire contourner ledit canal par le tube 32, dans le cas où l'on désire que ce dernier ne perturbe pas le passage de l'air de refroidissement dans ledit canal 12.

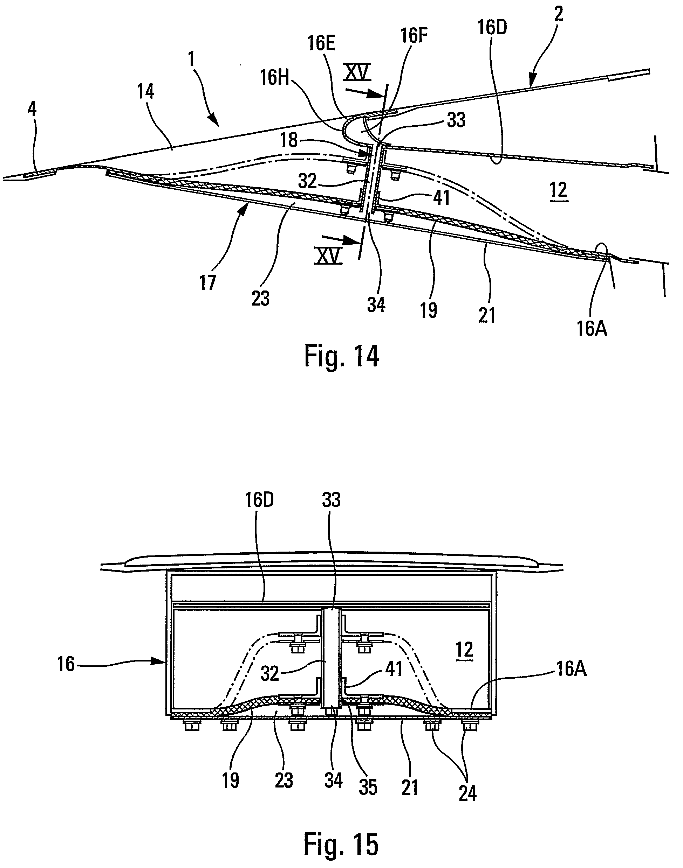

Dans la variante de réalisation dudit agencement 1 représentée sur les figures 14 et 15, au contraire, on met à profit le fait que le tube de liaison 32 traverse ledit canal 12 pour l'utiliser comme guidage de la membrane élastiquement déformable 19 lorsque celle-ci passe d'un état dégonflé à un état gonflé et inversement.

Pour cela, le tube de liaison 32 est perpendiculaire à la membrane 19 et son extrémité aval 34 est raccordée au centre de la membrane pour déboucher dans le volume interne 23 par le trou 35 prévu dans celle-ci. Un palier intermédiaire 41 assure la liaison entre l'extrémité aval 34 du tube et la membrane 19. Quant à l'extrémité amont 33 du tube, elle est intégrée à la paroi correspondante du bord supérieur arrondi 16E délimitant le canal. Ainsi, durant ses phases d'expansion et de rétraction, la membrane élastique 19 conserve une forme sensiblement symétrique et homogène.

La variation de la section transversale du canal 12 pour renouveler l'air de la zone confinée 11 en fonction de la vitesse et de l'altitude de l'avion, est bien entendu analogue à la réalisation décrite en regard des figures 11 et 12.

À toutes fins utiles, on remarquera que :
- le document US 3 611 724A décrit un moteur à double flux, dont le canal de soufflante comporte une membrane déformable gonflable apte à modifier la section dudit canal pour réduire le bruit émis par ledit moteur ; et
- le document US 2 396 598A décrit un capot de moteur à hélice, conçu pour réguler la quantité d'air qui le traverse.

## Revendications

1. Agencement d'entrée d'air de ventilation (1) comportant au moins un canal (12) de passage d'air avec un orifice (14) de prise d'air, destiné à ventiler au moins une zone confinée (11) dans un aéronef par de l'air extérieur entrant en amont, à travers ledit orifice de prise d'air, dans ledit canal et sortant en aval de celui-ci en direction de ladite zone à ventiler, ledit agencement d'entrée d'air comportant des moyens d'obturation commandables permettant de faire varier la section transversale dudit canal et lesdits moyens d'obturation commandables comportant au moins une membrane (19), élastiquement déformable sous l'action d'une commande fluidique (18),
**caractérisé en ce que** ladite commande fluidique (18) comporte un tube de liaison (32), dont l'extrémité amont (33) prélève la pression totale de l'air sur ledit aéronef et dont l'extrémité aval (34) est en communication avec ladite membrane, de sorte que la section transversale dudit canal varie automatiquement en fonction de la vitesse et de la l'altitude dudit aéronef.

2. Agencement selon la revendication 1,
**caractérisé en ce que** l'extrémité amont (33) dudit tube de liaison (32) prélève ladite pression totale au niveau du bord d'entrée (16E) dudit orifice (14) de prise d'air menant au canal, tandis que ladite extrémité aval (34) dudit tube traverse, de façon étanche, un trou de communication (35) ménagé dans ladite membrane.

3. Agencement selon l'une des revendications 1 ou 2,
**caractérisé en ce que** ladite membrane (19) est solidaire d'un support (21) avec lequel elle définit un volume interne variable (23) et qui est rapporté fixement sur une paroi latérale (16) délimitant ledit canal (12).

4. Agencement selon l'une des revendications 1 à 3,
**caractérisé en ce que** ledit canal (12) présente une section transversale rectangulaire délimitée par des parois latérales (16) deux à deux opposées, l'une (16A) des grandes parois latérales dudit canal comprenant ladite membrane élastiquement déformable (19) qui, quand ladite section transversale est maximale, est effacée par rapport audit canal et, quand ladite section transversale est minimale, obture partiellement ledit canal.

5. Agencement selon l'une des revendications 1 à 4,
**caractérisé en ce que** la déformation élastique de ladite membrane (19) est guidée axialement et **en ce que** ledit tube de liaison (32) fait office de guidage pour ladite membrane et s'engage perpendiculairement au centre de ladite membrane.

6. Agencement selon l'une des revendications 1 à 5,
**caractérisé en ce que** ladite membrane élastiquement déformable est circulaire ou quadrangulaire.

7. Agencement selon l'une des revendications 1 à 6,
**caractérisé en ce qu'**il comprend, de plus, un élément de protection (36) recouvrant au moins partiellement ladite membrane élastiquement déformable (19).

## Patentansprüche

1. Ventilationsluft-Einlassanordnung (1), welche wenigstens einen Luftdurchflusskanal (12) mit einer Luftansaugöffnung (14) aufweist und dazu bestimmt ist, wenigstens einen abgeschlossenen Bereich (11) in einem Luftfahrzeug mit Außenluft zu belüften, welche stromaufwärts durch die Luftansaugöffnung hindurch in den Kanal eintritt und stromabwärts desselben in Richtung des zu belüftenden Bereichs austritt, wobei die Lufteinlassanordnung steuerbare Verschlussmittel aufweist, die es ermöglichen, eine Änderung des Querschnitts des Kanals zu bewirken, und wobei die steuerbaren Verschlussmittel wenigstens eine Membran (19) aufweisen, die unter der Wirkung einer fluidischen Steuerung (18) elastisch verformbar ist,
**dadurch gekennzeichnet, dass** die fluidische Steuerung (18) ein Verbindungsrohr (32) aufweist, dessen stromaufwärtiges Ende (33) den Gesamtluftdruck auf dem Luftfahrzeug abgreift und dessen stromabwärtiges Ende (34) mit der Membran in Verbindung steht, so dass der Querschnitt des Kanals automatisch in Abhängigkeit von der Geschwindigkeit und von der Höhe des Luftfahrzeugs variiert.

2. Anordnung nach Anspruch 1,
**dadurch gekennzeichnet, dass** das stromaufwärtige Ende (33) des Verbindungsrohres (32) den Gesamtdruck am Eintrittsrand (16E) der Luftansaugöffnung (14) abgreift, die zu dem Kanal führt, während das stromabwärtige Ende (34) des Rohres auf eine dichte Weise ein Kommunikationsloch (35) durchquert, das in der Membran ausgebildet ist.

3. Anordnung nach Anspruch 1 oder 2,
**dadurch gekennzeichnet, dass** die Membran (19) mit einem Träger (21) fest verbunden ist, mit welchem sie ein variables Innenvolumen (23) definiert und welcher fest an einer Seitenwand (16) angebracht ist, die den Kanal (12) begrenzt.

4. Anordnung nach einem der Ansprüche 1 bis 3,
**dadurch gekennzeichnet, dass** der Kanal (12) einen rechteckigen Querschnitt aufweist, der von paarweise einander gegenüberliegenden Seitenwänden (16) begrenzt wird, wobei die eine (16A) der großen Seitenwände des Kanals die elastisch verformbare Membran (19) umfasst, welche, wenn der Querschnitt maximal ist, in Bezug auf den Kanal versenkt ist und, wenn der Querschnitt minimal ist, den Kanal teilweise verschließt.

5. Anordnung nach einem der Ansprüche 1 bis 4,
**dadurch gekennzeichnet, dass** die elastische Verformung der Membran (19) axial geführt wird, und dadurch, dass das Verbindungsrohr (32) als Führung für die Membran dient und senkrecht zum Mittelpunkt der Membran in Eingriff gelangt.

6. Anordnung nach einem der Ansprüche 1 bis 5,
**dadurch gekennzeichnet, dass** die elastisch verformbare Membran kreisförmig oder viereckig ist.

7. Anordnung nach einem der Ansprüche 1 bis 6,
**dadurch gekennzeichnet, dass** sie außerdem ein Schutzelement (36) umfasst, welches die elastisch verformbare Membran (19) wenigstens teilweise überdeckt.

## Claims

1. A ventilating air intake arrangement (1) comprising at least one air passage channel (12), with an air vent (14), designed to ventilate at least one confined zone (11) in an aircraft with fresh air entering upstream, through said air vent, into said channel and exiting downstream of the latter towards said zone to be ventilated, said air intake arrangement comprising controllable blocking means enabling the cross section of said channel to be varied, and said controllable blocking means comprising at least one membrane (19), elastically deformable under the action of a fluid control (18),
**characterized in that** said fluid control (18) comprises a link pipe (32), the upstream end (33) of which takes the total pressure on said aircraft and the downstream end (34) of which communicates with said membrane such that the cross section of said channel varies according to the speed and the altitude of said aircraft.

2. The arrangement as claimed in claim 1,
**characterized in that** the upstream end (33) of said link pipe (32) takes said total pressure at the intake end (16E) of said air vent (14) leading to the channel, while said downstream end (34) of said pipe passes, in a sealed manner, through a communicating hole (35) provided in said membrane.

3. The arrangement as claimed in one of claims 1 or 2,
**characterized in that** said membrane (19) is attached to a support (21) with which it defines a variable internal volume (23) and which is added in a fixed way to a lateral wall (16) delimiting said channel (12).

4. The arrangement as claimed in one of claims 1 to 3,
**characterized in that** said channel (12) has a rectangular cross section delimited by lateral walls (16) opposing in pairs, one (16A) of the major lateral walls of said channel comprising said elastically deformable membrane (19) which, when said cross section is at its maximum, is eliminated from said channel and, when said cross section is at its minimum, partially blocks said channel.

5. The arrangement as claimed in one of claims 1 to 4,
**characterized in that** the elastic deformation of said membrane (19) is guided axially and **in that** said link pipe (32) serves as a guide for said membrane and fits perpendicularly into the center of said membrane.

6. The arrangement as claimed in one of claims 1 to 5,
**characterized in that** said elastically deformable membrane is circular or quadrangular.

7. The arrangement as claimed in one of claims 1 to 6,
**characterized in that** it also comprises a protection element (36) at least partially covering said elastically deformable membrane (19).
